# EUROPEAN PATENT SPECIFICATION

(11) **EP 4 379 969 B1**
(45) Date of publication and mention of the grant of the patent: **25.02.2026**
(21) Application number: 22904581.0
(22) Date of filing: 02.12.2022
(51) Int. Cl.: H01R 13/52, H01R 13/405, H01R 43/00, H01R 43/24, H01M 50/296, B29C 45/14

(54) **WATERPROOF CONNECTOR AND BATTERY MODULE INCLUDING THE SAME**
WASSERDICHTER VERBINDER UND BATTERIEMODUL DAMIT
CONNECTEUR ÉTANCHE À L'EAU ET MODULE DE BATTERIE LE COMPRENANT

(30) Priority: 09.12.2021 KR 20210176160
(43) Date of publication of application: 05.06.2024
(73) Proprietor: LG Energy Solution, Ltd., Seoul 07335 (KR)
(72) Inventor: LEE, Hyun-Jong, Daejeon 34122 (KR); KIM, Jae-Sang, Daejeon 34122 (KR)
(74) Representative: Plasseraud IP
(86) International application number: PCT/KR2022/019520
(87) International publication number: WO 2023/106751

(56) References cited:
- CN-U- 209 805 042
- JP-A- 2005 327 570
- JP-A- 2007 200 820
- JP-A- 2009 093 935
- JP-A- 2017 073 402
- KR-A- 20170 084 549
- KR-A- 20210 067 888
- US-A1- 2012 094 539
- US-A1- 2018 190 965
- US-A1- 2021 336 375

## Description

### TECHNICAL FIELD

The present disclosure relates to a battery module including a module case and a waterproof connector.

### BACKGROUND ART

Types of secondary batteries that are currently widely used include lithium-ion batteries, lithium polymer batteries, nickel cadmium batteries, nickel hydride batteries, and nickel zinc batteries. An operating voltage of a unit secondary battery, that is, a unit battery cell, ranges from about 2.5 V to about 4.2 V. Accordingly, a battery pack is mounted on a device requiring a high output voltage and capacity such as an electric vehicle.

A battery pack generally includes one or more battery modules in which a plurality of battery cells are connected in series/parallel. Also, a battery module or a battery pack includes a sensing member for measuring voltages and temperatures of a plurality of battery cells, a battery management system (BMS) capable of voltage balancing and temperature control functions, and a cable and a connector for transmitting voltage and temperature information from the sensing member to the BMS.

Because a battery pack of an electric vehicle may be exposed to various environmental conditions, various electronic components need to be designed to cope with the various environmental conditions. For example, it is preferable that a battery module includes electronic components with waterproof performance above a certain level so that the battery module operates without abnormality even in snowy, rainy, or very humid environmental conditions.

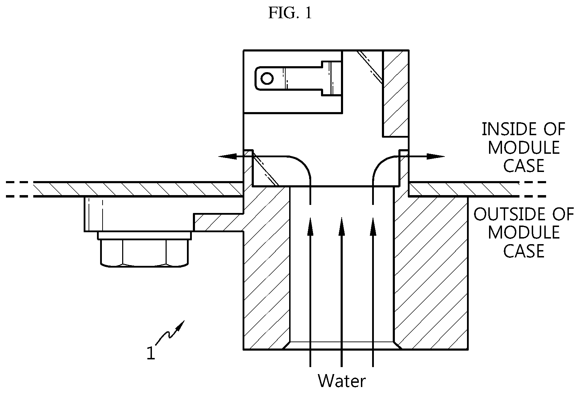

In particular, in a battery module, as shown in FIG. 1, because a connector 1 is located inside and outside a module case to function as a passage through which moisture may be introduced, it is preferable that the connector 1 having waterproof performance is used. However, there are not many waterproof connector products that are currently developed. Also, even when an existing non-waterproof connector of a battery module is to be replaced with a new waterproof connector, it is not easy to install the new waterproof connector in place of the existing non-waterproof connector due to a structural difference between the existing non-waterproof connector and the new waterproof connector. Accordingly, there is a need for a method of using an existing non-waterproof connector by adding waterproof performance to the existing non-waterproof connector.

US2012/094539 discloses on its figure 4 a waterproof connector for preventing a liquid such as water from intruding into the connector, wherein the connector comprises a terminal fitting, a connector housing and a potting material.

CN 209 805 042 U, according to its abstract, discloses a watertight plug connector for a sealed cabin plug cover of an underwater vehicle, and relates to the technical field of connecting devices for underwater vehicles.

US2018/190965 is considered as a technological background that shows a battery module, which includes a battery cell assembly having at least one battery cell, a module case configured to accommodate the battery cell assembly, and a module connector mounted at the module case, wherein the module connector includes a connector pin electrically connected to the battery cell assembly at the inside of the module case so as to be connected to an external connector at the outside of the module case.

US2021/336375, according to its title, is about a pass-through connector for a battery pack, a battery pack, and a method for introducing at least one gas in a hermetically sealable casing for a battery pack.

JP 2009 093935A relates to a socket suitable for applications requiring waterproofness and airtightness.

### DISCLOSURE

### Technical Problem

The present disclosure is designed to solve the problems of the related art, and therefore the present disclosure is directed to using an existing non-waterproof connector as a waterproof connector by adding a waterproof structure to the existing non-waterproof connector.

### Technical Solution

In one aspect of the present disclosure, there is provided a battery module including a module case and a waterproof connector as claimed in claim 1.

The bag molding member may be made by injection molding to fill the open space and cover the rear surface of the connector housing.

The connector cable may pass through the bag molding member and extend to an outside of the bag molding member.

The bag molding member may be made of a waterproof material.

The bag molding member may be provided by injection molding on the rear surface of the connector housing to surround a circumference of one side of the connector cable.

The connector housing and the bag molding member may be double injection molded products.

According to another aspect of the present disclosure, there is provided a method of manufacturing a battery module including a module case and a waterproof connector as claimed in claim 8.The electrical connection terminal may include a connector terminal formed of a metal material and having a part that is fixedly mounted in the connector housing and a remaining part that is exposed through the opening portion, and a connector cable connected to a side of the connector terminal.

The connector cable may pass through the bag molding member, and the bag molding member may be injection molded on the rear surface of the connector housing to surround a circumference of one side of the connector cable.

### Advantageous Effects

According to an aspect of the present disclosure, an existing non-waterproof connector may be used as a waterproof connector by adding a waterproof structure to the existing non-waterproof connector.

For example, in a battery module using an existing non-waterproof connector, when the non-waterproof connector is to be replaced with a connector having a waterproof function, according to the present disclosure, the existing non-waterproof connector may be re-used as a waterproof connector by adding a bag molding member to the non-waterproof connector.

### DESCRIPTION OF DRAWINGS

FIG. 1 is a cross-sectional view schematically illustrating a non-waterproof connector according to a related art applied to a battery module.
FIG. 2 is a perspective view schematically illustrating a battery module to which a waterproof connector is applied, according to an embodiment of the present disclosure.
FIG. 3 is a view schematically illustrating battery cells accommodated in a module case, according to an embodiment of the present disclosure.
FIG. 4 is a view illustrating a rear surface of a waterproof connector before a bag molding member is applied, according to an embodiment of the present disclosure.
FIG. 5 is a view illustrating a rear surface of a waterproof connector after a bag molding member is applied, according to an embodiment of the present disclosure.
FIG. 6 is a cross-sectional view schematically illustrating a waterproof connector, according to an embodiment of the present disclosure.

### BEST MODE

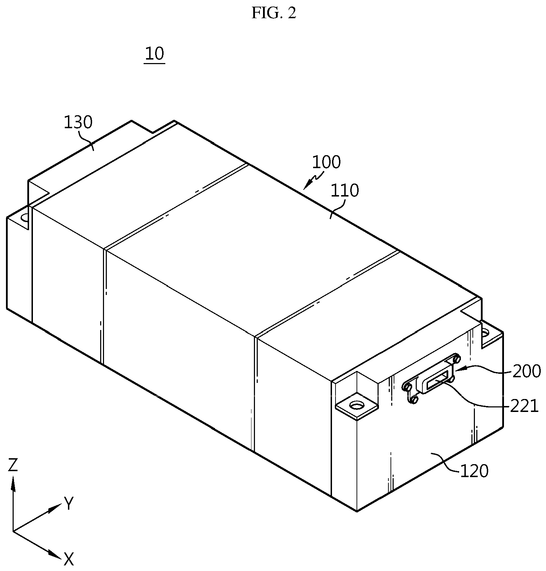

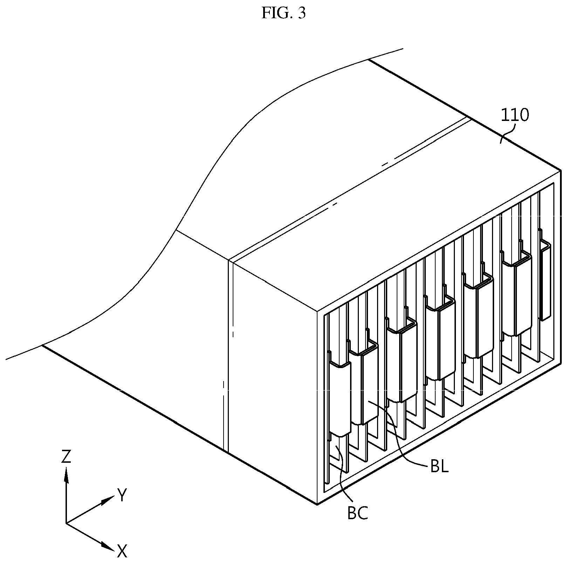

FIG. 2 is a perspective view schematically illustrating a battery module to which a waterproof connector is applied, according to an embodiment of the present disclosure. FIG. 3 is a view schematically illustrating battery cells accommodated in a module case, according to an embodiment of the present disclosure.

A battery module 10 according to an embodiment of the present disclosure includes a module case 100 and a waterproof connector 200 mounted on a side of the module case 100, as shown in FIG. 2. Although not shown for convenience of illustration, the battery module 10 further includes battery cells BC, a sensing unit for sensing voltages and/or temperatures of the battery cells BC, bus bars for electrically connecting the battery cells BC, a cooling unit, etc.

For example, the battery cell BC that has a thin plate-shaped body may be a pouch-type secondary battery. The pouch-type secondary battery includes a pouch case, and an electrode assembly and an electrolyte accommodated in the pouch case. For example, the pouch case may include two sheets, and a concave inner space may be formed in at least one of the two sheets. The electrode assembly may be accommodated in the inner space of the pouch. Circumferences of the two sheets may be fused to each other to seal the inner space in which the electrode assembly is accommodated. An electrode lead BL may be attached to the electrode assembly, and the electrode lead BL may be located between fused portions of the pouch case and exposed to the outside of the pouch case to function as an electrode terminal of the pouch-type secondary battery. Such pouch-type secondary batteries may be erected in an up-down direction and stacked in a left-right direction to form a stack structure as shown in FIG. 3, and may be collectively accommodated in the module case 100.

Unlike in the present embodiment, a cylindrical secondary battery or a prismatic secondary battery in which a case is formed of a metal can may be employed as the battery cell BC. That is, any of various battery cells BC known at the time of filing the present application may be employed in the battery module 10 of the present disclosure.

The module case 100 includes a main housing 110, a front cover 120, and a rear cover 130.

The main housing 110 may have a certain length (in an X-axis direction), and may have a substantially rectangular tubular shape with open front and rear sides in a longitudinal direction. Also, the main housing 110 may be formed of a metal material or a non-metal material having excellent mechanical rigidity to protect a cell assembly from external physical and chemical elements.

For reference, in the main housing 110, parts covering upper and lower portions of the cell stack including the battery cells BC are referred to as upper and lower plates and parts covering both side surfaces of the cell stack are referred to as left and right side plates, the main housing 110 has a so-called mono frame shape in which the upper plate, the lower plate, the left side plate, and the right side plate are all integrated. As an alternative to the main housing 110 having the mono frame shape, the main housing 110 in which a lower plate is coupled by using welding or the like to a so-called U-shaped frame in which an upper plate, a left side plate, and a right side plate are integrated may be employed.

Because the main housing 110 has a structure in which four sides are sealed, moisture and other foreign materials from the outside of the battery module 10 are not introduced into the main housing 110.

The front cover 120 and the rear cover 130 are structures respectively coupled to the open front and rear sides of the main housing 110 to shield exposure of the bus bars and the electrode leads BL. In the pouch-type secondary batteries, the electrode leads BL are welded to the bus bars (not shown) in a pre-determined pattern for electrical connection and are inserted into the main housing 110. In this case, the electrode leads BL and the plurality of bus bars are located on the front and rear sides of the main housing 110. Next, the front cover 120 and the rear cover 130 are respectively coupled to the front and rear sides of the main housing 110 so that the electrode leads BL and the bus bars are shielded from being exposed to the outside.

Although not shown for convenience of illustration, a sensing component for sensing states (voltages or temperatures) of the battery cells BC may be further provided in the module case 110, and the sensing component may be electrically connected to the waterproof connector 200.

The waterproof connector 200 is provided on a side of the module case 100 (an upper end of the front cover 120 in the present embodiment) so that a part of the waterproof connector 200 is located in the module case 100 and the remaining part is exposed to the outside of the module case 100. Another connector (e.g., a male connector when the waterproof connector 200 of the present embodiment is a female connector) is connected to the waterproof connector 200 to transmit state information of the battery cells BC to a control device outside the module case 100.

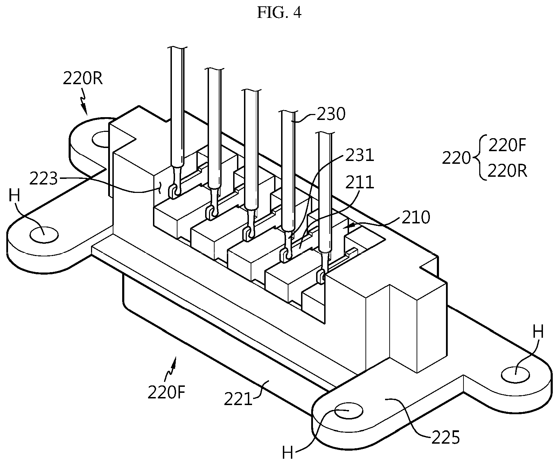

The waterproof connector 200 according to an embodiment of the present disclosure has a waterproof structure for preventing moisture or other foreign materials from being introduced into the module case 100. A configuration of the waterproof connector 200 will be described in more detail with reference to FIGS. 4 to 6.

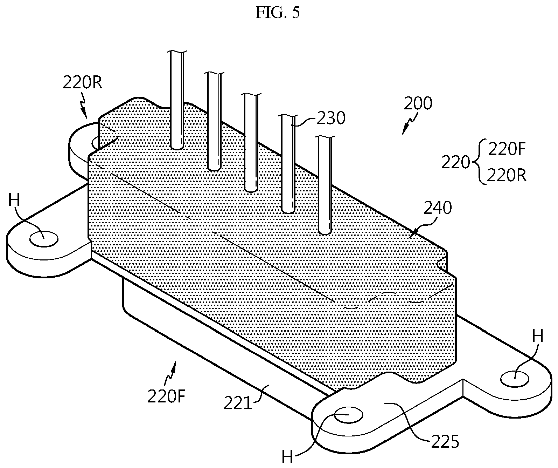

Referring to FIGS. 4 and 5, the waterproof connector 200 includes at least one connector terminal 210, a connector housing 220, a connector cable 230, and a bag molding member 240.

The connector terminal 210 that is a connection terminal for transmitting an electrical signal may be formed of a metal material such as copper or aluminum.

The connector terminal 210 may be inserted into and fixed to the connector housing 220 so that a side of the connector terminal 210 faces a connecting portion 221 of the connector housing 220 and the other side of the connector terminal 210 faces an opening portion 223 of the connector housing 220 described below.

Also, the connector terminal 210 includes a connection pin 211 provided close to the opening portion 223 and protruding in a cantilever shape from the body, as shown in FIG. 4. The connection pin 211 may be used to connect the connector cable 230 to the connector terminal 210. For example, the connector terminal 210 and the connector cable 230 may be electrically connected by soldering an end 231 of the connector cable 230 having the sheath removed to the connection pin 211 of the connector terminal 210. In this structure, the waterproof connector 200 of the present embodiment is configured to connect five connector terminals 210 to five connector cables 230. The five connector cables 230 may extend to a circuit board (sensing component) at a specific position in the module case 100.

The connector housing 220 includes the connecting portion 221 formed on a front surface 220F to connect another connector, the opening portion 223 formed on a rear surface 220R to form an open space through which the connector terminal 210 is exposed, and a mounting plate portion 225 that protrudes from an outer surface in a direction intersecting the connecting portion 221.

The mounting plate portion 225 includes fastening holes H for fastening bolts at ends, and is used to fix the waterproof connector 200 to a side of the module case 100.

The connector housing 220 may be manufactured by using injection molding, and preferably, may be formed of plastic having high hardness.

The connecting portion 221 may have a plug-in structure in which a portion of another connector may be inserted. For example, when the waterproof connector 200 is assembled on the module case 100, the connecting portion 221 may be exposed to the outside of the module case 100 as shown in FIG. 2.

In other words, the rear surface 220R of the waterproof connector 200 is inserted inward from the outside of the module case 100 through a connector installation hole provided in the front cover 120, and the mounting plate portion 225 is blocked by an outer surface of the front cover 120 and thus the connecting portion 221 is exposed to the outside of the front cover 120. Bolts are inserted into the fastening holes H of the mounting plate portion 225 and fastened to the front cover 120 to fix the mounting plate portion 225. In this configuration, the waterproof connector 200 may be stably fixed to an outer wall of the module case 100, and the front surface 220F of the waterproof connector 200 may be located outside the module case 100 and the rear surface 220R of the waterproof connector 200 may be located inside the module case 100.

Referring back to FIG. 4, the opening portion 223 of the connector housing 220 refers to a portion where the rear surface 220R of the connector housing 220 is opened by an arrangement width of the connector terminals 210, in order to facilitate assembly of the connector terminals 210 and soldering or welding of the connector terminals 210 to the connector cables 230.

Because the opening portion 223 and the connecting portion 221 of the connector housing 220 communicate with each other, moisture or foreign materials may enter the connecting portion 221 and may be introduced into the module case 100 through the opening portion 223. To prevent this, the waterproof connector 200 has a structure in which the opening portion 223 is completely surrounded and sealed by the bag molding member 240 as shown in FIG. 5.

The bag molding member 240 may be provided on the rear surface 220R of the connector housing 220 by using injection molding.

For example, the bag molding member 240 may be integrated with the rear surface 220R of the connector housing 220 by inserting the connector housing 220 into a mold (mold for the bag molding member 240) while the connector cables 230 are connected. As a resin for forming the bag molding member 240, a resin having excellent waterproof performance, for example, a polyurethane resin or a silicone resin, may be used.

The bag molding member 240 according to an embodiment of the present disclosure may be integrated with the connector housing 220 by completely filling the open space formed in the opening portion 223 of the connector housing 220 and covering the rear surface 220R of the connector housing 220, and the connector cable 230 may pass through the bag molding member 240 and may extend to the outside of the bag molding member 240.

Not only an outer surface of the bag molding member 240 shown in FIG. 5 but also the inside of the bag molding member 240 covering the rear surface 220R of the connector housing 220 are completely filled with a resin. For reference, although the inside of the bag molding member 240 covering the rear surface 220R of the connector housing 220 is also completely filled with a resin to maximize waterproof performance in the present embodiment, as an alternative to the present embodiment, the bag molding member 240 may be formed as a hollow cover.

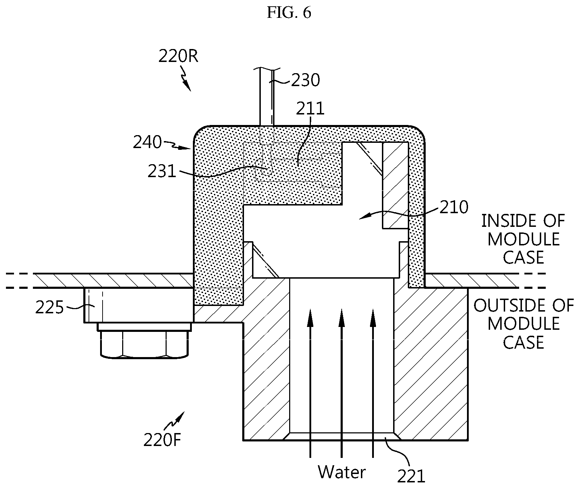

Also, referring to FIG. 6, because the bag molding member 240 completely surrounds a circumference of one side of the connector cable 240, airtightness of a portion through which the connector cable 230 passes may also be ensured.

That is, when the bag molding member 240 is injection molded on the rear surface 220R of the connector housing 220, because a polyurethane resin or a silicone resin completely surrounds a circumference of one side of the connector cable 230 and is cured, the circumference of the side of the connector cable 230 and the bag molding member 240 are fixed to each other. The circumference of the side of the connector cable 230 refers to a circumference from an end of the connector cable 230 (having the sheath removed) to a point drawn out to the outside of the bag molding member 240. Accordingly, although the connector cable 230 passes through the bag molding member 240 and extends to the outside, there is no problem with waterproof performance. Also, because one side of the connector cable 230 is fixed to the bag molding member 240, a connected portion (soldered portion) between the connector cable 230 and the connector terminal 210 is not broken even with strong impact.

According to the configuration of the present disclosure as described above, even when moisture enters the connector housing 220, the moisture is blocked by the bag molding member 240 and does not flow into the module case 100. Also, because a resin is filled in a space between the connector terminals 210 during injection molding, the connector terminals 210 may not be corroded by moisture.

Next, a method of manufacturing the waterproof connector 200 will be briefly described.

A method of manufacturing the waterproof connector 200 according to an embodiment of the present disclosure includes: preparing the connector housing 220 including the connecting portion 221 on the rear surface 220F and the opening portion 223 on the rear surface 220R; assembling an electrical connection terminal on the connector housing 220; and injection molding the bag molding member 240 on the rear surface 220R of the connector housing 220 to seal the opening portion 223.

In the preparing of the connector housing 220, the connector housing 220 may be manufactured by using injection molding or the existing connector housing 220 with no waterproof function may be used as it is.

The electrical connection terminal includes the connector terminal 210 formed of a metal material and having a part that is fixedly mounted in the connector housing 220 and the reaming part that is exposed through the opening portion 223, and the connector cable 230 connected to a side of the connector terminal 210.

That is, the electrical connection terminal may refer to the connector terminal 210 and the connector cable 230. Before the bag molding member 240 is injection molded, the connector terminal 210 is assembled on the opening portion 223 of the connector housing 220, and then, the sheath of an end of the connector cable 2230 is removed and the end is soldered to the connection pin 211 of the connector terminal 210.

Next, the connector housing 220 is put into a mold (mold for the bag molding member 240) while the connector cables 230 are connected, and a polyurethane resin or a silicone resin is injected to injection mold the bag molding member 240 on the rear surface 220R of the connector housing 220.

According to the method of manufacturing a waterproof connector as described above, an existing non-waterproof connector may be used as a waterproof connector by adding a waterproof structure to the existing non-waterproof connector structure. For example, in a battery module using an existing non-waterproof connector, when the non-waterproof connector is to be replaced with a connector having a waterproof function, according to the present disclosure, the existing non-waterproof connector may be re-used as a waterproof connector by adding a bag molding member to the non-waterproof connector.

It will be understood by one of ordinary skill in the art that when terms indicating directions such as upper, lower, left, and right are used, these terms are only for convenience of explanation and may vary according to a position of a target object, a position of an observer, etc.

## Claims

1. A battery module (10) including a module case (100) and a waterproof connector (200) mounted on a side of the module case (100),
wherein the waterproof connector (200) comprises:
at least one connector terminal (210);
a connector housing (220) comprising a connecting portion (221) formed on a front surface (220F) and exposed to the outside of the module case (100) to connect another connector and an opening portion (223) formed on a rear surface (220R) to form an open space through which the connector terminal (210) is exposed and a mounting plate portion (225) that protrudes from an outer surface in a direction intersecting the connecting portion (221) and that is used to fix the waterproof connector to the side of the module case (100);
a connector cable (230) connected to a side of the connector terminal (210) exposed through the opening portion (223); and
**characterised in that** the waterproof connector (200) further comprises a bag molding member (240) which is an injection molded product, the bag molding member (240) surrounding and sealing the opening portion (223).

2. The battery module (10) according to claim 1, wherein the bag molding member (240) is made by injection molding to fill the open space and cover the rear surface (220R) of the connector housing (220).

3. The battery module (10) according to claim 1, wherein the connector cable (230) passes through the bag molding member (240) and extends to an outside of the bag molding member (240).

4. The battery module (10) according to claim 1, wherein the bag molding member (240) is made of a waterproof material.

5. The battery module (10) according to claim 1, wherein the bag molding member (240) is provided by injection molding on the rear surface (220R) of the connector housing (220) to surround a circumference of one side of the connector cable (230).

6. The battery module (10) according to claim 1, wherein the connector housing (220) and the bag molding member (240) are double injection molded products.

7. The battery module (10) according to claim 1, wherein the mounting plate portion (225) includes fastening holes (H) and is fastened to a front cover (120) of the module case (120) by bolts inserted into the fastening holes (H).

8. A method of manufacturing a battery module (10) including a module case (100) and a waterproof connector (200) mounted on a side of the module case (100), the method comprising:
providing a battery module (10) including a module case (100);
preparing a connector housing (220) comprising a connecting portion (221) on a front surface (220F), an opening portion (223) on a rear surface (220R) and a mounting plate portion (225) that protrudes from an outer surface in a direction intersecting the connecting portion (221) and that is used to fix the waterproof connector to the side of the module case (100); and
assembling an electric connection terminal on the connector housing (220);
**characterised in that** the method further comprises injection molding a bag molding member (240) on the rear surface (220) of the connector housing (220) to seal the opening portion (223).

9. The method of manufacturing a battery module (10) with a waterproof connector (200) according to claim 8, wherein the electrical connection terminal comprises:
a connector terminal (210) formed of a metal material and having a part that is fixedly mounted in the connector housing (220) and a remaining part that is exposed through the opening portion (223); and
a connector cable (230) connected to a side of the connector terminal.

10. The method of manufacturing a battery module (10) with a waterproof connector (200) according to claim 9, wherein the connector cable (230) passes through the bag molding member (240), and the bag molding member (240) is injection molded on the rear surface of the connector housing (220) to surround a circumference of one side of the connector cable (230).

## Patentansprüche

1. Batteriemodul (10), umfassend ein Modulgehäuse (100) und ein wasserdichtes Verbindungselement (200), welches an einer Seite des Modulgehäuses (100) montiert ist,
wobei das wasserdichte Verbindungselement (200) umfasst:
wenigstens einen Verbindungselement-Anschluss (210);
ein Verbindungselement-Gehäuse (220), welches einen Verbindungsabschnitt (221), welcher an einer vorderen Fläche (220F) gebildet ist und zu der Außenseite des Modulgehäuses (100) exponiert ist, um ein weiteres Verbindungselement zu verbinden, und einen Öffnungsabschnitt (223), welcher an einer hinteren Fläche (220R) gebildet ist, um einen offenen Raum zu bilden, durch welchen der Verbindungselement-Anschluss (210) exponiert ist, und einen Montageplattenabschnitt (225) umfasst, welcher von einer äußeren Fläche in einer Richtung hervorsteht, welche den Verbindungsabschnitt (221) schneidet, und welcher verwendet wird, um das wasserdichte Verbindungselement an der Seite des Modulgehäuses (100) zu fixieren;
ein Verbindungselement-Kabel (230), welches mit einer Seite des Verbindungselement-Anschlusses (210) verbunden ist, welche durch den Öffnungsabschnitt (223) exponiert ist; und
**dadurch gekennzeichnet, dass** das wasserdichte Verbindungselement (200) ferner ein Beutelformungselement (240) umfasst, welches ein spritzgegossenes Erzeugnis ist, wobei das Beutelformungselement (240) den Öffnungsabschnitt (223) umgibt und diesen abdichtet.

2. Batteriemodul (10) nach Anspruch 1, wobei das Beutelformungselement (240) durch Spritzguss erzeugt wird, um den offenen Raum zu füllen und die hintere Fläche (220R) des Verbindungselement-Gehäuses (220) abzudecken.

3. Batteriemodul (10) nach Anspruch 1, wobei das Verbindungselement-Kabel (230) durch das Beutelformungselement (240) verläuft und sich zu einer Außenseite des Beutelformungselements (240) erstreckt.

4. Batteriemodul (10) nach Anspruch 1, wobei das Beutelformungselement (240) aus einem wasserdichten Material erzeugt ist.

5. Batteriemodul (10) nach Anspruch 1, wobei das Beutelformungselement (240) durch Spritzgießen an der hinteren Fläche (220R) des Verbindungselement-Gehäuses (220) bereitgestellt ist, um einen Umfang einer Seite des Verbindungselement-Kabels (230) zu umgeben.

6. Batteriemodul (10) nach Anspruch 1, wobei das Verbindungselement-Gehäuse (220) und das Beutelformungselement (240) zweifach spritzgegossene Erzeugnisse sind.

7. Batteriemodul (10) nach Anspruch 1, wobei der Montageplattenabschnitt (225) Befestigungslöcher (H) umfasst und durch Bolzen, welche in die Befestigungslöcher (H) eingeführt sind, an einer vorderen Abdeckung (120) des Modulgehäuses (120) befestigt ist.

8. Verfahren zur Herstellung eines Batteriemoduls (10), welches ein Modulgehäuse (100) und ein wasserdichtes Verbindungselement (200) umfasst, welches an einer Seite des Modulgehäuses (100) montiert ist, wobei das Verfahren umfasst:
Bereitstellen eines Batteriemoduls (10), welches ein Modulgehäuse (100) umfasst;
Vorbereiten eines Verbindungselement-Gehäuses (220), welches einen Verbindungsabschnitt (221) an einer vorderen Fläche (220F), einen Öffnungsabschnitt (223) an einer hinteren Fläche (220R) und einen Montageplattenabschnitt (225) umfasst, welcher von einer äußeren Fläche in einer Richtung hervorsteht, welche den Verbindungsabschnitt (221) schneidet, und welcher verwendet wird, um das wasserdichte Verbindungselement an der Seite des Modulgehäuses (100) zu fixieren; und
Zusammenfügen eines elektrischen Verbindungsanschlusses an dem Verbindungselement-Gehäuse (220);
**dadurch gekennzeichnet, dass** das Verfahren ferner ein Spritzgießen eines Beutelformungselements (240) an der hinteren Fläche (220) des Verbindungselement-Gehäuses (220) umfasst, um den Öffnungsabschnitt (223) abzudichten.

9. Verfahren zur Herstellung eines Batteriemoduls (10) mit einem wasserdichten Verbindungselement (200) nach Anspruch 8, wobei der elektrische Verbindungsanschluss umfasst:
einen Verbindungselement-Anschluss (210), welcher aus einem Metallmaterial gebildet ist und welcher einen Teil, welcher fest in dem Verbindungselement-Gehäuse (220) montiert ist, und einen verbleibenden Teil aufweist, welcher durch den Öffnungsabschnitt (223) exponiert ist; und
ein Verbindungselement-Kabel (230), welches mit einer Seite des Verbindungselement-Anschlusses verbunden ist.

10. Verfahren zur Herstellung eines Batteriemoduls (10) mit einem wasserdichten Verbindungselement (200) nach Anspruch 9, wobei das Verbindungselement-Kabel (230) durch das Beutelformungselement (240) verläuft, und wobei das Beutelformungselement (240) an der hinteren Fläche des Verbindungselement-Gehäuses (220) spritzgegossen wird, um einen Umfang einer Seite des Verbindungselement-Kabels (230) zu umgeben.

## Revendications

1. Module de batterie (10) comportant un boîtier de module (100) et un connecteur étanche à l'eau (200) monté sur un côté du boîtier de module (100),
dans lequel le connecteur étanche à l'eau (200) comprend :
au moins une borne de connecteur (210) ;
un boîtier de connecteur (220) comprenant une partie de connexion (221) formée sur une surface avant (220F) et exposée à l'extérieur du boîtier de module (100) pour connecter un autre connecteur et une partie d'ouverture (223) formée sur une surface arrière (220R) pour former un espace ouvert à travers lequel la borne de connecteur (210) est exposée et une partie plaque de montage (225) qui fait saillie à partir d'une surface extérieure dans une direction croisant la partie de connexion (221) et qui est utilisée pour fixer le connecteur étanche à l'eau sur le côté du boîtier de module (100) ;
un câble de connecteur (230) connecté à un côté de la borne de connecteur (210) exposé à travers la partie d'ouverture (223) ; et
**caractérisé en ce que** le connecteur étanche à l'eau (200) comprend en outre un élément de moulage au sac (240) qui est un produit moulé par injection, l'élément de moulage au sac (240) entourant et scellant la partie d'ouverture (223).

2. Module de batterie (10) selon la revendication 1, dans lequel l'élément de moulage au sac (240) est réalisé par moulage par injection pour remplir l'espace ouvert et recouvrir la surface arrière (220R) du boîtier de connecteur (220).

3. Module de batterie (10) selon la revendication 1, dans lequel le câble de connecteur (230) passe à travers l'élément de moulage au sac (240) et s'étend jusqu'à un extérieur de l'élément de moulage au sac (240).

4. Module de batterie (10) selon la revendication 1, dans lequel l'élément de moulage au sac (240) est constitué d'un matériau étanche à l'eau.

5. Module de batterie (10) selon la revendication 1, dans lequel l'élément de moulage au sac (240) est fourni par moulage par injection sur la surface arrière (220R) du boîtier de connecteur (220) pour entourer une circonférence d'un côté du câble de connecteur (230).

6. Module de batterie (10) selon la revendication 1, dans lequel le boîtier de connecteur (220) et l'élément de moulage au sac (240) sont des produits moulés par double injection.

7. Module de batterie (10) selon la revendication 1, dans lequel la partie plaque de montage (225) comporte des trous de fixation (H) et est fixée à un couvercle avant (120) du boîtier de module (120) au moyen de boulons insérés dans les trous de fixation (H).

8. Procédé de fabrication d'un module de batterie (10) comportant un boîtier de module (100) et un connecteur étanche à l'eau (200) monté sur un côté du boîtier de module (100), le procédé comprenant :
une fourniture d'un module de batterie (10) comportant un boîtier de module (100) ;
une préparation d'un boîtier de connecteur (220) comprenant une partie de connexion (221) sur une surface avant (220F), une partie d'ouverture (223) sur une surface arrière (220R) et une partie plaque de montage (225) qui fait saillie à partir d'une surface extérieure dans une direction croisant la partie de connexion (221) et qui est utilisée pour fixer le connecteur étanche à l'eau au côté du boîtier de module (100) ; et
un assemblage d'une borne de connexion électrique sur le boîtier de connecteur (220) ;
**caractérisé en ce que** le procédé comprend en outre le moulage par injection d'un élément de moulage au sac (240) sur la surface arrière (220) du boîtier de connecteur (220) pour sceller la partie d'ouverture (223).

9. Procédé de fabrication d'un module de batterie (10) avec un connecteur étanche à l'eau (200) selon la revendication 8, dans lequel la borne de connexion électrique comprend :
une borne de connecteur (210) formée d'un matériau métallique et ayant une partie qui est montée de manière fixe dans le boîtier de connecteur (220) et une partie restante qui est exposée à travers la partie d'ouverture (223) ; et
un câble de connecteur (230) connecté à un côté de la borne de connecteur.

10. Procédé de fabrication d'un module de batterie (10) avec un connecteur étanche à l'eau (200) selon la revendication 9, dans lequel le câble de connecteur (230) passe à travers l'élément de moulage au sac (240), et l'élément de moulage au sac (240) est moulé par injection sur la surface arrière du boîtier de connecteur (220) pour entourer une circonférence d'un côté du câble de connecteur (230).
